# FASCICULE DE BREVET EUROPEEN

(11) **EP 2 167 328 B1**
(45) Date de publication et mention de la délivrance du brevet: **14.09.2011**
(21) Numéro de dépôt: 08784619.2
(22) Date de dépôt: 04.07.2008
(51) Int. Cl.: B60C 1/00

(54) **OBJET PNEUMATIQUE POURVU D'UNE COUCHE ETANCHE AUX GAZ A BASE D'UN ELASTOMERE THERMOPLASTIQUE ET D'UNE CHARGE LAMELLAIRE**
DRUCKLUFTGEGENSTAND MIT GASUNDURCHLÄSSIGER SCHICHT AUF DER BASIS EINES THERMOPLASTISCHEN ELASTOMERS UND SCHICHTENFÖRMIGEN FÜLLERS
PNEUMATIC OBJECT PROVIDED WITH A GAS-IMPERMEABLE LAYER BASED ON A THERMOPLASTIC ELASTOMER AND A PLATY FILLER

(30) Priorité: 11.07.2007 FR 0705000
(43) Date de publication de la demande: 31.03.2010
(73) Titulaire: Société de Technologie MICHELIN, 63000 Clermont-Ferrand (FR); MICHELIN Recherche et Technique S.A., 1763 Granges-Paccot (CH)
(72) Inventeur: LESAGE, Pierre, F-63000 Clermont-Ferrand (FR); CUSTODERO, Emmanuel, F-63400 Chamalieres (FR)
(74) Mandataire: Ribière, Joel
(86) Numéro de dépôt international: PCT/EP2008/005479
(87) Numéro de publication internationale: WO 2009/007064

(56) Documents cités:
- EP-A- 0 732 224
- EP-A- 0 857 761
- EP-A- 1 145 872
- EP-A- 1 479 724
- EP-A- 1 647 420
- WO-A-2005/017013
- US-A- 5 576 373
- US-A1- 2004 031 550

## Description

La présente invention est relative aux objets "pneumatiques", c'est-à-dire, par définition, aux objets qui prennent leur forme utilisable quand on les gonfle d'air ou d'un gaz de gonflage équivalent.

Elle se rapporte plus particulièrement aux couches étanches aux gaz assurant l'étanchéité de ces objets pneumatiques, en particulier celle des bandages pneumatiques.

Dans un bandage pneumatique conventionnel du type "tubeless" (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse et plus généralement le reste du pneumatique d'un risque d'oxydation dû à la diffusion d'air provenant de l'espace intérieur au bandage.

Cette fonction de couche interne ou "gomme intérieure" (*"inner liner"*) étanche est aujourd'hui remplie par des compositions à base de caoutchouc butyl (copolymère d'isobutylène et d'isoprène), reconnues depuis fort longtemps pour leurs excellentes propriétés d'étanchéité.

Toutefois, un inconvénient bien connu des compositions à base de caoutchouc ou élastomère butyl est qu'elles présentent des pertes hystérétiques importantes, qui plus est sur un spectre large de température, inconvénient qui pénalise la résistance au roulement des bandages pneumatiques (voir EP 1479 724 A1).

Le document EP 0732 224 A1 décrit une composition pour couche étanche de pneumatique qui comprend des résines incompatibles, par example des compositions élastomères à base de polyéthylène.

Diminuer l'hystérèse de ces couches internes d'étanchéité et donc in fine la consommation de carburant des véhicules automobiles, est un objectif général auquel se heurte la technologie actuelle.

Or, les Demanderesses ont découvert lors de leurs recherches qu'une composition élastomère autre qu'une composition butyl permet l'obtention de couches internes d'étanchéité répondant à un tel objectif, tout en garantissant à ces dernières d'excellentes propriétés d'étanchéité. Ainsi, selon un premier objet, la présente invention concerne un objet pneumatique pourvu d'une couche étanche aux gaz de gonflage, caractérisé en ce que ladite couche comporte une composition élastomère comprenant au moins, à titre de seul élastomère ou d'élastomère majoritaire en poids, un élastomère thermoplastique styrénique ("TPS") et une charge lamellaire dont le taux volumique est supérieur à 5% (% en volume de la composition).

Comparativement à un caoutchouc butyl, l'élastomère TPS présente l'avantage majeur, en raison de sa nature thermoplastique, de pouvoir être travaillé tel quel à l'état fondu (liquide), et par conséquent d'offrir une possibilité de mise en oeuvre simplifiée ; il s'est révélé en outre compatible avec l'emploi de charge lamellaire à des taux particulièrement élevés, ce qui permet d'améliorer encore l'étanchéité comparativement aux solutions connues de l'art antérieur à base de caoutchouc butyl.

De préférence, la composition élastomère comporte en outre une huile d'extension de l'élastomère TPS, qui améliore l'intégration de la couche élastomère dans l'objet pneumatique, par un abaissement du module et une augmentation du pouvoir tackifiant de cette dernière.

L'invention concerne particulièrement les objets pneumatiques en caoutchouc tels que des bandages pneumatiques, ou les chambres à air, notamment les chambres à air pour bandage pneumatique.

L'invention concerne plus particulièrement les bandages pneumatiques destinés à équiper des véhicules à moteur de type tourisme, SUV ("*Sport Utility Vehicles*"), deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

### I. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I-1. Composition élastomère étanche aux gaz

L'objet pneumatique selon l'invention a pour caractéristique essentielle d'être pourvu d'une couche étanche aux gaz de gonflage comportant une composition élastomère comprenant au moins, à titre de seul élastomère ou d'élastomère majoritaire en poids présent dans ladite composition, un élastomère thermoplastique styrénique auquel est auquel est associé une charge lamellaire à un taux volumique supérieur à 5%, et optionnellement une huile d'extension dudit élastomère.

### I-1-A. Elastomère thermoplastique styrénique (TPS)

Les élastomères thermoplastiques styréniques (en abrégé "TPS") font partie, de manière connue, de la famille des élastomères thermoplastiques (en abrégé "TPE"). De structure intermédiaire entre polymères thermoplastiques et élastomères, ils sont constitués de séquences rigides polystyrène reliées par des séquences souples élastomère, par exemple polybutadiène, polyisoprène, poly(éthylène/butylène), ou encore polyisobutylène. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple unités styrène et unités isoprène pour un copolymère blocs styrène/ isoprène/ styrène).

L'élastomère TPS peut être choisi notamment dans le groupe constitué par les copolymères blocs styrène/ butadiène/ styrène, les copolymères blocs styrène/ isoprène/ styrène, les copolymères blocs styrène/ isobutylène/ styrène, les copolymères blocs styrène/ isoprène/ butadiène/ styrène, les copolymères blocs styrène/ éthylène/ butylène/ styrène, les copolymères blocs styrène/ éthylène/ propylène/ styrène, les copolymères blocs styrène/ éthylène/ éthylène/ propylène/ styrène et les mélanges de ces copolymères.

De préférence, l'élastomère TPS est un copolymère à blocs polystyrène et polyisobutylène. Par une telle définition doit être entendu tout copolymère thermoplastique comportant au moins un bloc polystyrène (c'est-à-dire un ou plusieurs blocs polystyrène) et au moins un bloc polyisobutylène (c'est-à-dire un ou plusieurs blocs polyisobutylène), auxquels peuvent être associés ou non d'autres blocs (par exemple polyéthylène et/ou polypropylène) et/ou d'autres unités monomères (par exemple des unités insaturées telles que diéniques).

Plus préférentiellement encore, un tel copolymère blocs est un copolymère tribloc styrène/ isobutylène/ styrène (en abrégé "SIBS"). Par élastomère ou copolymère SIBS on entend dans la présente demande, par définition, tout élastomère tribloc styrène/ isobutylène/ styrène dans lequel le bloc central polyisobutylène peut être interrompu ou non par une ou plusieurs unités insaturées, en particulier une ou plusieurs unités diéniques telles qu'isopréniques, éventuellement halogénées.

Selon un mode de réalisation préférentiel de l'invention, le taux pondéral de styrène, dans l'élastomère TPS, est compris entre 5% et 50%. En dessous du minimum indiqué, le caractère thermoplastique de l'élastomère risque de diminuer de manière sensible tandis qu'au-dessus du maximum préconisé, l'élasticité de la couche étanche peut être affectée. Pour ces raisons, le taux de styrène est plus préférentiellement compris entre 10% et 40%, en particulier entre 15 et 35%.

Par styrène, doit être entendu dans la présente description tout monomère à base de styrène, non substitué comme substitué ; parmi les styrènes substitués peuvent être cités par exemple les méthylstyrènes (par exemple α-méthylstyrène, β-méthylstyrène, *p*-méthylstyrène, *tert-*butylstyrène) les chlorostyrènes (par exemple monochlorostyrène, dichlorostyrène).

On préfère que la température de transition vitreuse (Tg, mesurée selon ASTM D3418) de l'élastomère TPS soit inférieure à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg de l'élastomère TPS est plus préférentiellement encore inférieure à - 50°C.

La masse moléculaire moyenne en nombre (notée Mn) de l'élastomère TPS est préférentiellement comprise entre 30 000 et 500 000 g/mol, plus préférentiellement comprise entre 40 000 et 400 000 g/mol. En dessous des minima indiqués, la cohésion entre les chaînes de l'élastomère, notamment en raison de l'éventuelle dilution de ce dernier par une huile d'extension, risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation de la composition dans un bandage pneumatique.

La masse moléculaire moyenne en nombre (Mn) de l'élastomère TPS est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) de l'élastomère TPS est de préférence inférieur à 3 ; plus préférentiellement Ip est inférieur à 2.

L'élastomère TPS et la charge lamellaire peuvent constituer à eux seuls la couche élastomère étanche aux gaz ou bien être associés, dans la composition élastomère, à d'autres élastomères.

Si d'éventuels autres élastomères sont utilisés dans la composition, l'élastomère TPS constitue l'élastomère majoritaire en poids ; il représente alors de préférence plus de 50%, plus préférentiellement plus de 70% en poids de l'ensemble des élastomères présents dans la composition élastomère. De tels élastomères complémentaires, minoritaires en poids, pourraient être par exemple des élastomères diéniques tels que du caoutchouc naturel ou un polyisoprène synthétique, un caoutchouc butyl ou des élastomères thermoplastiques autres que styréniques, dans la limite de la compatibilité de leurs microstructures.

Toutefois, selon un mode de réalisation préférentiel, l'élastomère TPS, en particulier SIBS, est le seul élastomère, et le seul élastomère thermoplastique présent dans la composition élastomère de la couche étanche aux gaz.

Les élastomères TPS peuvent être mis en oeuvre de façon classique pour des TPE, par extrusion ou moulage, par exemple à partir d'une matière première disponible sous la forme de billes ou de granulés.

Les élastomères TPS sont disponibles commercialement, vendus par exemple en ce qui concerne les SIBS par la société KANEKA sous la dénomination "SIBSTAR" (e.g. "Sibstar 102T", "Sibstar 103T" ou "Sibstar 073T"). Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPE, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146).

Toutefois, à la connaissance des Demanderesses, aucun document de l'état de la technique ne décrit ni ne suggère l'utilisation dans un objet pneumatique tel que notamment un bandage pneumatique, d'une composition élastomère comportant en combinaison un élastomère TPS tel que SIBS et plus de 5% en volume de charge lamellaire, composition qui s'est révélée, de manière tout à fait inattendue, apte à concurrencer des compositions conventionnelles à base de caoutchouc butyl.

### I-1-B. Charge lamellaire

L'utilisation de charge lamellaire, à un taux volumique qui peut être particulièrement élevé puisque compris préférentiellement entre 5% et 50%, permet avantageusement d'abaisser le coefficient de perméabilité (donc d'augmenter l'étanchéité) de la composition élastomère, sans augmenter de façon excessive son module, ce qui permet de conserver la facilité d'intégration de la couche étanche dans l'objet pneumatique.

Les charges dites lamellaires (en anglais "*platy fillers*") sont bien connues de l'homme du métier. Elles ont été utilisées notamment dans des bandages pneumatiques pour réduire la perméabilité des couches étanches aux gaz conventionnelles à base de caoutchouc butyl. Dans ces couches à base de butyl, elles sont généralement utilisées à des taux relativement faibles, n'excédant pas le plus souvent 10 à 15 pce (voir par exemple les documents brevet US 2004/0194863, WO 2006/047509).

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 voire 800 µm).

Préférentiellement, les charges lamellaires utilisées conformément à l'invention sont choisies dans le groupe constitué par les graphites, les phyllosilicates et les mélanges de telles charges. Parmi les phyllosilicates, on citera notamment les argiles, talcs, micas, kaolins, ces phyllosilicates pouvant être modifiés ou non par exemple par un traitement de surface ; à titre d'exemples de tels phyllosilicates modifiés, on peut citer notamment des micas recouverts d'oxyde de titane, des argiles modifiées par des tensioactifs (*"organo clays"*).

On utilise préférentiellement des charges lamellaires à faible énergie de surface, c'est-à-dire relativement apolaires, telles que celles choisies dans le groupe constitué par les graphites, les talcs, les micas et les mélanges de telles charges, ces dernières pouvant être modifiées ou non, plus préférentiellement encore dans le groupe constitué par les graphites, les talcs et les mélanges de telles charges. Parmi les graphites peuvent être cités notamment les graphites naturels, les graphites expansés ou les graphites synthétiques.

Comme exemples de micas, on peut citer les micas commercialisés par la société CMMP (Mica-MU®, Mica-Soft®, Briomica® par exemple), les vermiculites (notamment la vermiculite Shawatec® commercialisée par CMMP ou la vermiculite Microlite® commercialisée par W.R.Grace), les micas modifiés ou traités (par exemple, la gamme Iriodin® commercialisée par Merck). Comme exemples de graphites, on peut citer les graphites commercialisés par la société Timcal (gamme Timrex®). Comme exemple de talcs, on peut citer les talcs commercialisés par la société Luzenac.

Les charges lamellaires décrites ci-dessus sont utilisées à un taux élevé, supérieur à 5%, de préférence au moins égal à 10% en volume de composition élastomère. Un tel taux volumique correspond typiquement, compte tenu de la densité moyenne des charges lamellaires utilisées (typiquement entre 2,0 et 3,0) et de celle des élastomères TPS utilisés, à un taux pondéral supérieur à 20 pce, de préférence au moins égal à 40 pce.

Pour augmenter encore l'étanchéité de la couche d'élastomère TPS, on peut utiliser un taux de charge lamellaire encore supérieur, au moins égal à 15% voire 20% en volume, ce qui correspond typiquement à des taux pondéraux au moins égaux à 50 pce voire 80 pce. Des taux pondéraux supérieurs à 100 pce sont même avantageusement possibles.

Le taux de charge lamellaire est toutefois préférentiellement inférieur à 50% en volume (typiquement inférieur à 500 pce), limite supérieure à partir de laquelle on peut être exposé à des problèmes d'augmentation du module, de fragilisation de la composition, difficultés de dispersion de la charge et de mise en oeuvre, sans parler d'une pénalisation possible de l'hystérèse.

L'introduction des charges lamellaires dans la composition thermoplastique élastomère peut être réalisée selon divers procédés connus, par exemple par mélangeage en solution, par mélangeage en masse dans un mélangeur interne, ou encore par mélangeage par extrusion.

### I-1-C. Huile d'extension

L'élastomère TPS et la charge lamellaire sont suffisants à eux seuls pour que soit remplie la fonction d'étanchéité aux gaz vis-à-vis des objets pneumatiques dans lesquels ils sont utilisés.

Toutefois, selon un mode de réalisation préférentiel de l'invention, la composition élastomère précédemment décrite comporte également, à titre d'agent plastifiant, une huile d'extension (ou huile plastifiante) dont la fonction est de faciliter la mise en oeuvre de la couche étanche aux gaz, particulièrement son intégration dans l'objet pneumatique par un abaissement du module et une augmentation du pouvoir tackifiant.

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Si l'on a constaté que l'ajout d'huile se faisait certes au prix d'une certaine perte d'étanchéité, variable selon le type et la quantité d'huile utilisée, cette perte d'étanchéité peut être largement corrigée en ajustant le taux de charge lamellaire.

On utilise préférentiellement une huile du type polybutène, en particulier une huile polyisobutylène (en abrégé "PIB"), qui a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffiniques sont commercialisées par exemple par EXXON sous la dénomination "Telura 618" ou par Repsol sous la dénomination "Extensol 51".

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l ; puis la solution est filtrée sur filtre de porosité 0,45 µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche élastomère étanche aux gaz, notamment de l'objet pneumatique dans lequel elle est destinée à être utilisée.

On préfère que le taux d'huile d'extension soit supérieur à 5 pce, de préférence compris entre 5 et 100 pce (parties en poids pour cent parties d'élastomère total, c'est-à-dire élastomère TPS plus tout autre élastomère éventuel présent dans la composition ou couche élastomère).

En dessous du minimum indiqué, la composition élastomère risque de présenter une rigidité trop forte pour certaines applications tandis qu'au-delà du maximum préconisé, on s'expose à un risque de cohésion insuffisante de la composition et de perte d'étanchéité pouvant être néfaste selon l'application considérée.

Pour ces raisons, en particulier pour une utilisation de la composition étanche dans un bandage pneumatique, on préfère que le taux d'huile d'extension soit supérieur à 10 pce, notamment compris entre 10 et 90 pce, plus préférentiellement encore qu'il soit supérieur à 20 pce, notamment compris entre 20 et 80 pce.

### I-1-D. Additifs divers

La couche ou composition étanche à l'air décrite précédemment peut comporter par ailleurs les divers additifs usuellement présents dans les couches étanches à l'air connues de l'homme du métier. On citera par exemple des charges renforçantes telles que du noir de carbone ou de la silice, des charges non renforçantes ou inertes autres que les charges lamellaires précédemment décrites, des agents colorants avantageusement utilisables pour la coloration de la composition, des plastifiants autres que les huiles d'extension précitées, des résines tackifiantes, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

Outre les élastomères (TPS et autres élastomères éventuels) précédemment décrits, la composition étanche aux gaz pourrait aussi comporter, toujours selon une fraction pondérale minoritaire par rapport à l'élastomère TPS, des polymères autres que des élastomères, tels que par exemple des polymères thermoplastiques compatibles avec l'élastomère TPS.

La couche ou composition étanche aux gaz précédemment décrite est un composé solide (à 23°C) et élastique, qui se caractérise notamment, grâce à sa formulation spécifique, par une très haute souplesse et très haute déformabilité.

Selon un mode de réalisation préférentiel de l'invention, cette couche ou composition étanche aux gaz présente un module sécant en extension, à 10% d'allongement (noté M10), qui est inférieur à 2 MPa, plus préférentiellement inférieur à 1,5 MPa (notamment inférieur à 1 MPa). Cette grandeur est mesurée en première élongation (c'est-à-dire sans cycle d'accommodation) à une température de 23°C, avec une vitesse de traction de 500 mm/min (norme ASTM D412), et rapportée à la section initiale de l'éprouvette.

### 1-2. Utilisation de la couche étanche à l'air dans un bandage pneumatique

La composition à base d'élastomère TPS précédemment décrite est utilisable comme couche étanche à l'air dans tout type d'objet pneumatique. A titre d'exemples de tels objets pneumatiques, on peut citer les bateaux pneumatiques, les ballons ou balles utilisées pour le jeu ou le sport.

Elle est particulièrement bien adaptée à une utilisation comme couche étanche à l'air (ou tout autre gaz de gonflage, par exemple azote) dans un objet pneumatique, produit fini ou semi-fini, en caoutchouc, tout particulièrement dans un bandage pneumatique pour véhicule automobile tel qu'un véhicule de type deux roues, tourisme ou industriel.

Une telle couche étanche à l'air est préférentiellement disposée sur la paroi interne de l'objet pneumatique, mais elle peut être également intégrée complètement à sa structure interne.

L'épaisseur de la couche étanche à l'air est préférentiellement supérieure à 0,05 mm, plus préférentiellement comprise entre 0,1 mm et 10 mm (notamment entre 0,1 et 1,0 mm).

On comprendra aisément que, selon les domaines d'application spécifiques, les dimensions et les pressions en jeu, le mode de mise en oeuvre de l'invention peut varier, la couche étanche à l'air comportant alors plusieurs gammes d'épaisseur préférentielles.

Ainsi par exemple, pour des bandages pneumatiques de type tourisme, elle peut avoir une épaisseur d'au moins 0,4 mm, préférentiellement comprise entre 0,8 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

Comparativement à une couche étanche à l'air usuelle à base de caoutchouc butyl, la couche étanche à l'air selon l'invention a l'avantage de présenter non seulement une hystérèse plus faible, et donc d'offrir une résistance au roulement réduite aux bandages pneumatiques, mais encore une étanchéité au moins égale sinon largement améliorée, comme cela est démontré dans les exemples de réalisation qui suivent.

### II. EXEMPLES DE REALISATION DE L'INVENTION

La couche étanche aux gaz précédemment décrite est avantageusement utilisable dans les bandages pneumatiques de tous types de véhicules, en particulier véhicules tourisme ou véhicules industriels tels que Poids-lourd.

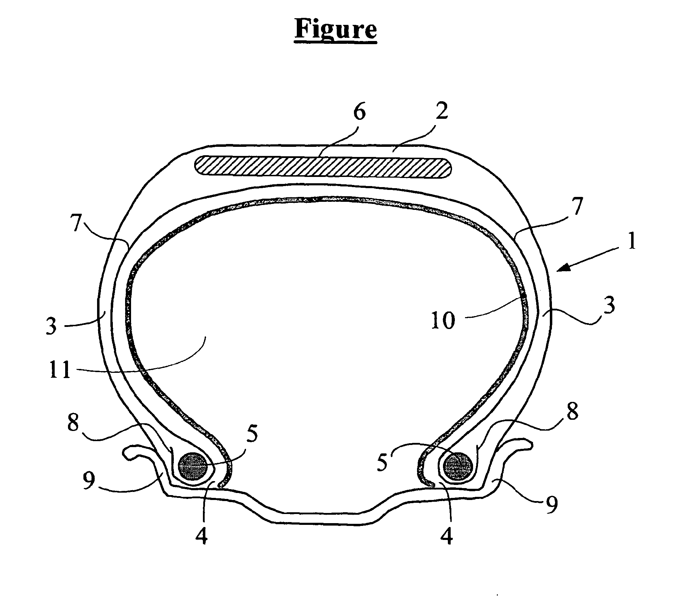

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du côté de la cavité interne 11 du bandage pneumatique 1.

Cette couche interne (ou "*inner liner*") couvre toute la paroi interne du bandage pneumatique, se prolongeant d'un flanc à l'autre, au moins jusqu'au niveau du crochet de jante lorsque le bandage pneumatique est en position montée. Elle définit la face radialement interne dudit bandage destinée à protéger l'armature de carcasse de la diffusion d'air provenant de l'espace 11 intérieur au bandage. Elle permet le gonflement et le maintien sous pression du bandage pneumatique ; ses propriétés d'étanchéité doivent lui permettre de garantir un taux de perte de pression relativement faible, de maintenir le bandage gonflé, en état de fonctionnement normal, pendant une durée suffisante, normalement de plusieurs semaines ou plusieurs mois.

Contrairement à un bandage pneumatique conventionnel utilisant une composition à base de caoutchouc butyl, le bandage pneumatique conforme à l'invention utilise dans cet exemple, comme couche 10 étanche à l'air, une composition élastomère comportant un élastomère SIBS ("Sibstar 102T" avec un taux de styrène d'environ 15%, une Tg d'environ - 65°C et une Mn d'environ 90 000 g/mol) étendu par exemple avec une huile PIB (par exemple 55 pce d'huile "Dynapak Poly 190" - Mn de l'ordre de 1000 g/mol), ainsi que plus de 5% en volume de charge lamellaire (par exemple 33 pce de mica "Iriodin153").

Le pneumatique pourvu de sa couche étanche à l'air (10) tel que décrit ci-dessus peut être réalisé avant ou après vulcanisation (ou cuisson).

Dans le premier cas (i.e., avant cuisson du bandage pneumatique), la couche étanche à l'air est simplement appliquée de façon conventionnelle à l'endroit souhaité, pour formation de la couche 10. La vulcanisation est ensuite effectuée classiquement. Les élastomères TPS supportent bien les contraintes liées à l'étape de vulcanisation.

Une variante de fabrication avantageuse, pour l'homme du métier des bandages pneumatiques, consistera par exemple au cours d'une première étape, à déposer à plat la couche étanche à l'air directement sur un tambour de confection, sous la forme d'une couche (*"skim"*) d'épaisseur adaptée, avant de recouvrir cette dernière avec le reste de la structure du bandage pneumatique, selon des techniques de fabrication bien connues de l'homme du métier.

Dans le second cas (i.e., après cuisson du bandage pneumatique), la couche étanche est appliquée à l'intérieur du bandage pneumatique cuit par tout moyen approprié, par exemple par collage, par pulvérisation ou encore extrusion et soufflage d'un film d'épaisseur appropriée.

### II-1. Tests d'étanchéité

Dans les exemples qui suivent, les propriétés d'étanchéité ont tout d'abord été analysées sur des éprouvettes de compositions à base de caoutchouc butyl d'une part, d'élastomère TPS d'autre part (avec et sans huile d'extension, pour ce qui concerne l'élastomère TPS, et avec des charges lamellaires de nature et à des taux variables).

Pour cette analyse, on a utilisé un perméamètre à parois rigides, placé dans une étuve (température de 60°C dans le cas présent), muni d'un capteur de pression relative (étalonné dans le domaine de 0 à 6 bars) et relié à un tube équipé d'une valve de gonflage. Le perméamètre peut recevoir des éprouvettes standard sous forme de disque (par exemple de diamètre 65 mm dans le cas présent) et d'épaisseur uniforme pouvant aller jusqu'à 3 mm (0,5 mm dans le cas présent). Le capteur de pression est connecté à une carte d'acquisition de données *National Instruments* (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire donnant la pente α de la perte de pression à travers l'éprouvette testée en fonction du temps, après stabilisation du système c'est-à-dire obtention d'un régime stable au cours duquel la pression décroît linéairement en fonction du temps.

### A) Essai 1

Des compositions étanches aux gaz contenant un élastomère SIBS ("Sibstar 102T"), une huile PIB ("Dynapak 190") et des taux variables de charge lamellaire ("Iriodin 153", mica recouvert d'oxyde de titane) ont été préparées (charge lamellaire introduite dans TPS et PIB mis tous deux préalablement en solution dans un solvant organique tel que cyclohexane). Puis elles ont été comparées à une composition conventionnelle pour couche interne, à base de caoutchouc butyl et de noir de carbone (sans charge lamellaire). L'étanchéité a été mesurée sur éprouvettes selon le mode opératoire décrit ci-dessus.

Leur formulation et leur performance relative, par rapport au témoin à base de caoutchouc butyl (composition C-1), sont indiquées dans le tableau 1 qui suit. Les taux de plastifiant sont exprimés en pce, ceux de charge lamellaire en pce (par rapport au poids d'élastomère SIBS) ainsi qu'en % volumique (par rapport au volume total de la composition d'élastomère TPS).

**Tableau 1**

| Composition N°: | C-1 | C-2 | C-3 | C-4 | C-5 | C-6 | C-7 |
|---|---|---|---|---|---|---|---|
| Caoutchouc butyl | 100 | - | - | - | - | - | - |
| Elastomère TPS (SISB) | - | 100 | 100 | 100 | 100 | 100 | 100 |
| Huile (PIB) (pce) | - | - | 67 | 67 | 67 | 67 | 67 |
| Mica (pce) | - | - | - | 50 | 82 | 126 | 165 |
| Mica (% vol) | - | - | - | 9 | 14 | 20 | 25 |
| Etanchéité relative (%) | 100 | 100 | 53 | 140 | 197 | 309 | 505 |

Seules les compositions C-4 à C-7 sont donc conformes à l'invention.

Tout d'abord, on note que l'élastomère TPS seul (composition C-2), utilisé sans charge lamellaire ni huile d'extension, présente déjà une très bonne étanchéité puisque équivalente à celle de la composition usuelle à base de caoutchouc butyl (composition C-1). Ceci constitue déjà un résultat remarquable pour un tel matériau. Son module M10 est inférieur de près de 40% à celui de la composition témoin (1,4 MPa comparé à 2,3 MPa).

L'ajout d'une huile polybutène à l'élastomère SIBS, destiné à faciliter comme décrit précédemment la mise en oeuvre et l'intégration de la couche étanche au gaz dans l'objet pneumatique, notamment grâce à un abaissement du module et une augmentation du pouvoir tackifiant de ladite composition, se fait toutefois au prix d'une perte notable d'étanchéité (perte d'un facteur deux environ sur la composition C-3). Il est à noter qu'en présence d'une huile conventionnelle telle que paraffinique, cette perte d'étanchéité était encore plus marquée (perte d'un facteur quatre par rapport au témoin) ; c'est en cela que la combinaison de l'élastomère TPS tel que SIBS et d'huile polybutène telle que PIB s'est révélée offrir le meilleur compromis de propriétés.

La perte d'étanchéité se trouve toutefois largement corrigée sur les compositions conformes à l'invention, grâce à la présence de la charge lamellaire : ainsi, les compositions C-4 à C-7 permettent de manière inattendue, même en présence de l'huile d'extension, d'offrir un niveau d'étanchéité largement supérieur à celui de la composition témoin (C-1) à base de caoutchouc butyl. On note par exemple qu'un taux de charge lamellaire au moins égal à environ 15% ou 20% en volume (typiquement taux pondéral supérieur à environ 80 pce ou 120 pce) permet d'augmenter l'étanchéité d'au moins un facteur deux à trois par rapport à la solution témoin.

### B) Essai 2

D'autres compositions élastomères ont été préparées, contenant l'élastomère SIBS ("Sibstar 102T"), l'huile PIB ("Dynapak 190") et des taux variables d'une charge lamellaire du type graphite ("Timrex BNB90") ; SIBS et PIB ont été mélangés préalablement par extrusion, à l'aide d'une extrudeuse double vis), avant d'incorporer la charge lamellaire au mélange SIRS et PIB, dans un mélangeur interne.

Leur formulation et leur performance relative, par rapport au témoin constitué d'un caoutchouc butyl (composition C-8), sont indiquées dans le tableau 2 qui suit. Les taux d'huile PIB sont exprimés en pce, ceux de charge lamellaire en pce (par rapport au poids d'élastomère SIBS) ainsi qu'en % volumique (par rapport au volume total de la composition).

**Tableau 2**

| Composition N°: | C-8 | C-9 | C-10 | C-11 | C-12 | C-13 |
|---|---|---|---|---|---|---|
| Caoutchouc butyl | 100 | - | - | - | - | - |
| Elastomère TPS (SISB) | - | 100 | 100 | 100 | 100 | 100 |
| Huile (PIB) (pce) | - | - | 55 | 55 | 55 | 55 |
| Graphite (pce) | - | - | - | 19 | 42 | 67 |
| Graphite (% vol) | - | - | - | 5 | 10 | 15 |
| Etanchéité relative (%) | 100 | 100 | 55 | 61 | 103 | 142 |

Seules les compositions C-12 et C-13, comportant plus de 5% en volume (soit environ plus de 20 pce) de charge lamellaire, sont donc conformes à l'invention.

Les résultats du tableau 2 confirment ceux du tableau 1 précédent, à savoir que la formulation spécifique des compositions selon l'invention (C-12 et C-13) permet d'atteindre un niveau d'étanchéité au moins égal sinon supérieur à celui de la composition témoin en caoutchouc butyl (C-8). La composition C-11 ne permet pas d'atteindre un étanchéité satisfaisante en raison d'un taux pondéral de charge lamellaire inférieur à 20 pce (19 pce correspondant à un taux volumique de 5%), ce qui représente pourtant un taux usuel pour des compositions conventionnelles à base de caoutchouc butyl comportant des charges lamellaires.

### II-2. Tests en bandage pneumatique

A la suite des tests de laboratoire ci-dessus, des bandages pneumatiques conformes à l'invention, du type pour véhicule tourisme (dimension 195/65 R15), ont été fabriqués, leur paroi interne étant recouverte par une couche étanche à l'air (10) d'une épaisseur de 0,9 mm (posée sur tambour de confection, avant fabrication du reste du pneumatique). Puis, les pneumatiques ont été vulcanisés. La dite couche étanche à l'air (10) était formée du SIBS étendu avec 55 pce d'huile PIB et comportant une charge lamellaire (33 pce, soit environ 7% en volume, de mica "Iriodin 153").

Ces bandages pneumatiques conformes à l'invention ont été comparés à des bandages pneumatiques témoins (marque Michelin "Energy 3") comportant une couche étanche à l'air conventionnelle, de même épaisseur, à base de caoutchouc butyl. L'étanchéité des deux types de bandages a été mesurée (perte de pression à 20°C après 4 semaines) ; elle se situait au même niveau.

La résistance au roulement des bandages pneumatiques a été mesurée sur un volant, selon la méthode ISO 87-67 (1992). On a constaté que les bandages pneumatiques de l'invention présentaient une résistance au roulement réduite de manière très significative et inattendue pour l'homme du métier, de près de 4% par rapport aux bandages pneumatiques témoins.

En conclusion, l'invention offre aux concepteurs de bandages pneumatiques l'opportunité de réduire l'hystérèse des couches internes d'étanchéité de manière très sensible, et donc la consommation de carburant des véhicules automobiles équipés de tels bandages, tout en assurant une étanchéité au moins égale, sinon supérieure à celle obtenue avec une couche étanche à l'air conventionnelle en caoutchouc butyl.

## Revendications

1. Objet pneumatique pourvu d'une couche étanche aux gaz de gonflage, **caractérisé en ce que** ladite couche comporte une composition élastomère comprenant au moins, à titre de seul élastomère ou d'élastomère majoritaire en poids, un élastomère thermoplastique styrénique ("TPS") et une charge lamellaire à un taux volumique supérieur à 5% en volume de la composition élastomère.

2. Objet pneumatique selon la revendication 1, dans lequel l'élastomère TPS est un copolymère à blocs polystyrène et polyisobutylène.

3. Objet pneumatique selon la revendication 2, dans lequel l'élastomère TPS est un copolymère styrène/ isobutylène/ styrène.

4. Objet pneumatique selon l'une quelconque des revendications 1 à 3, dans lequel l'élastomère TPS comprend entre 5 et 50% en masse de styrène.

5. Objet pneumatique selon l'une quelconque des revendications 1 à 4, dans lequel la température de transition vitreuse de l'élastomère TPS est inférieure à - 20°C.

6. Objet pneumatique selon l'une quelconque des revendications 1 à 5, dans lequel la masse moléculaire moyenne en nombre de l'élastomère TPS est comprise entre 30 000 et **500** 000 g/mol.

7. Objet pneumatique selon l'une quelconque des revendications 1 à 6, dans lequel le taux volumique de charge lamellaire est compris entre 5% et 50%.

8. Objet pneumatique selon l'une quelconque des revendications 1 à 7, dans lequel la charge lamellaire est choisie dans le groupe constitué par les graphites, les phyllosilicates, et les mélanges de telles charges.

9. Objet pneumatique selon la revendication 8, dans lequel la charge lamellaire est choisie dans le groupe constitué par les graphites, les talcs, les micas, et les mélanges de telles charges.

10. Objet pneumatique selon l'une quelconque des revendications 1 à 9, dans lequel la composition élastomère comporte en outre une huile d'extension de l'élastomère.

11. Objet pneumatique selon la revendication 10, dans lequel l'huile d'extension est choisie dans le groupe constitué par les huiles polyoléfiniques, les huiles paraffiniques, les huiles naphténiques, les huiles aromatiques, les huiles minérales, et les mélanges de ces huiles.

12. Objet pneumatique selon la revendication 11, dans lequel l'huile d'extension est une huile polybutène, de préférence une huile polyisobutylène.

13. Objet pneumatique selon l'une quelconque des revendications 10 à 12, dans lequel la masse moléculaire moyenne en nombre de l'huile d'extension est comprise entre 200 et 25 000 g/mol.

14. Objet pneumatique selon l'une quelconque des revendications 10 à 13, dans lequel le taux d'huile d'extension est supérieur à 5 pce, de préférence compris entre 5 et 100 pce.

15. Objet pneumatique selon l'une quelconque des revendications 1 à 14, **caractérisé en ce que** ledit objet pneumatique est un bandage pneumatique ou une chambre à air.

## Claims

1. Inflatable article equipped with a layer impermeable to inflation gases, **characterized in that** said layer comprises an elastomer composition comprising at least, as the sole elastomer or as the predominant elastomer by weight, a thermoplastic styrene elastomer ("TPS") and a platy filler having a volume content of greater than 5% by volume of the elastomer composition.

2. Inflatable article according to Claim 1, in which the TPS elastomer is a copolymer containing polystyrene and polyisobutylene blocks.

3. Inflatable article according to Claim 2, in which the TPS elastomer is a styrene/isobutylene/styrene copolymer.

4. Inflatable article according to any one of Claims 1 to 3, in which the TPS elastomer comprises between 5 and 50% by weight of styrene.

5. Inflatable article according to any one of Claims 1 to 4, in which the glass transition temperature of the TPS elastomer is less than -20°C.

6. Inflatable article according to any one of Claims 1 to 5, in which the number-average molecular weight of the TPS elastomer is between 30 000 and 500 000 g/mol.

7. Inflatable article according to any one of Claims 1 to 6, in which the volume content of platy filler is between 5% and 50%.

8. Inflatable article according to any one of Claims 1 to 7, in which the platy filler is chosen from the group composed of graphites, phyllosilicates and mixtures of such fillers.

9. Inflatable article according to Claim 8, in which the platy filler is chosen from the group composed of graphites, talcs, micas, and mixtures of such fillers.

10. Inflatable article according to any one of Claims 1 to 9, in which the elastomer composition also comprises an extender oil for the elastomer.

11. Inflatable article according to Claim 10, in which the extender oil is chosen from the group composed of polyolefin oils, paraffinic oils, naphthenic oils, aromatic oils, mineral oils, and mixes of these oils.

12. Inflatable article according to Claim 11, in which the extender oil is a polybutene oil, preferably a polyisobutylene oil.

13. Inflatable article according to any one of Claims 10 to 12, in which the number-average molecular weight of the extender oil is between 200 and 25 000 g/mol.

14. Inflatable article according to any one of Claims 10 to 13, in which the content of extender oil is greater than 5 phr, preferably between 5 phr and 100 phr.

15. Inflatable article according to any one of Claims 1 to 14, **characterized in that** said inflatable article is a pneumatic tyre or an inner tube.

## Patentansprüche

1. Pneumatisches Objekt, das mit einer aufpumpgasdichten Schicht versehen ist, **dadurch gekennzeichnet, daß** die Schicht eine Elastomerzusammensetzung umfaßt, die mindestens als einziges Elastomer oder gewichtsmäßig überwiegendes Elastomer ein thermoplastisches Styrolelastomer ("TPS") und einen plättchenförmigen Füllstoff in einem Volumengehalt von mehr als 5 Vol.-%, bezogen auf die Elastomerzusammensetzung, enthält.

2. Pneumatisches Objekt nach Anspruch 1, wobei es sich bei dem TPS-Elastomer um ein Copolymer mit Polystyrol- und Polyisobutylenblöcken handelt.

3. Pneumatisches Objekt nach Anspruch 2, wobei es sich bei dem TPS-Elastomer um ein Styrol/Isobutylen/Styrol-Copolymer handelt.

4. Pneumatisches Objekt nach einem der Ansprüche 1 bis 3, wobei das TPS-Elastomer zwischen 5 und 50 Gew.-% Styrol umfaßt.

5. Pneumatisches Objekt nach einem der Ansprüche 1 bis 4, wobei die Glasübergangstemperatur des TPS-Elastomers weniger als -20°C beträgt.

6. Pneumatisches Objekt nach einem der Ansprüche 1 bis 5, wobei das zahlenmittlere Molekulargewicht des TPS-Elastomers zwischen 30.000 und 500.000 g/mol liegt.

7. Pneumatisches Objekt nach einem der Ansprüche 1 bis 6, wobei der Volumengehalt des plättchenförmigen Füllstoffs zwischen 5% und 50% liegt.

8. Pneumatisches Objekt nach einem der Ansprüche 1 bis 7, wobei der plättchenförmige Füllstoff aus der Gruppe bestehend aus Graphiten, Phyllosilikaten und Mischungen derartiger Füllstoffe ausgewählt ist.

9. Pneumatisches Objekt nach Anspruch 8, wobei der plättchenförmige Füllstoff aus der Gruppe bestehend aus Graphiten, Talken, Glimmern und Mischungen derartiger Füllstoffe ausgewählt ist.

10. Pneumatisches Objekt nach einem der Ansprüche 1 bis 9, wobei die Elastomerzusammensetzung außerdem ein Strecköl für das Elastomer umfaßt.

11. Pneumatisches Objekt nach Anspruch 10, wobei das Strecköl aus der Gruppe bestehend aus Polyolefinölen, Paraffinölen, naphthenischen Ölen, aromatischen Ölen, Mineralölen und Mischungen dieser Öle ausgewählt ist.

12. Pneumatisches Objekt nach Anspruch 11, wobei es sich bei dem Strecköl um ein Polybutenöl, vorzugsweise ein Polyisobutylenöl, handelt.

13. Pneumatisches Objekt nach einem der Ansprüche 10 bis 12, wobei das zahlenmittlere Molekulargewicht des Strecköls zwischen 200 und 25.000 g/mol liegt.

14. Pneumatisches Objekt nach einem der Ansprüche 10 bis 13, wobei der Streckölgehalt mehr als 5 phe beträgt und vorzugsweise zwischen 5 und 100 phe liegt.

15. Pneumatisches Objekt nach einem der Ansprüche 1 bis 14, **dadurch gekennzeichnet, daß** es sich dabei um einen Luftreifen oder einen Luftschlauch handelt.
